# FASCICULE DE BREVET EUROPEEN

(11) **EP 3 969 752 B1**
(45) Date de publication et mention de la délivrance du brevet: **17.01.2024**
(21) Numéro de dépôt: 20724865.9
(22) Date de dépôt: 15.05.2020
(51) Int. Cl.: F04B 53/10, F04B 15/02, F04B 53/22, B05B 9/04, F16K 15/04

(54) **POMPE POUR UN SYSTÈME D'APPLICATION DE PRODUIT DE REVÊTEMENT ET UTILISATION D'UNE TELLE POMPE**
PUMPE FÜR EIN SYSTEM ZUR AUFTRAGUNG EINER BESCHICHTUNG UND VERWENDUNG EINER SOLCHEN PUMPE
PUMP FOR A COATING APPLICATION SYSTEM AND USE OF SUCH A PUMP

(30) Priorité: 16.05.2019 FR 1905163
(43) Date de publication de la demande: 23.03.2022
(73) Titulaire: Exel Industries, 51200 Epernay (FR)
(72) Inventeur: PLANTARD, Nicolas, 75009 PARIS (FR); MORALES, François, 75009 PARIS (FR)
(74) Mandataire: Lavoix
(86) Numéro de dépôt international: PCT/EP2020/063591
(87) Numéro de publication internationale: WO 2020/229653

(56) Documents cités:
- EP-A1- 1 333 206
- US-A- 2 103 427
- US-A- 3 009 476
- US-A- 3 330 217
- US-A- 4 286 622
- US-A- 4 775 303
- US-A1- 2017 292 506

## Description

La présente invention concerne une pompe pour un système d'application de produit de revêtement et une utilisation d'une telle pompe.

US 3 330 217 A décrit une pompe à mouvement alternatif, avec un clapet d'aspiration, comprenant un siège, une bille, un élément de retenue de la bille et un col d'attache.

US 3 009 476 A décrit un clapet avec un corps, qui délimite un conduit pour un flux unidirectionnel, renfermant une bille coopérant avec un siège, la bille étant retenue dans une cage formée par des guides de bille.

EP 1 333 206 A1 divulgue un clapet connecté à un tube allongé appartenant à une pompe à mouvement alternatif. Le clapet comprend une bille coopérant avec un siège.

US 2 103 427 A divulgue un clapet avec un corps de clapet et un siège accouplé avec le corps à l'aide d'une bague, le corps de clapet renfermant une bille coopérant avec le siège.

Les pompes pneumatiques pour les systèmes d'application de produit de revêtement, tels que les peintures ou les vernis, comportent un clapet d'aspiration du produit, à travers lequel le produit est refoulé sous haute pression, à partir d'une source contenant le produit et vers un dispositif d'application. Ce clapet est généralement vissé au corps de pompe et assure une étanchéité par rapport à l'extérieur et l'arrêt du flux de produit en période d'arrêt de la pompe.

Le passage du produit dans le clapet d'aspiration implique un nettoyage périodique. Lorsque le produit refroidit, un dépôt sous forme de peau peut apparaître, et la pompe peut à terme ne plus aspirer le produit.

Le clapet doit alors être démonté, pour nettoyer les pièces qui le constituent, notamment la soupape, le siège de la soupape, le corps du clapet, les pièces qui assurent l'étanchéité entre le clapet et le corps de pompe, etc. Ces opérations de démontage nécessitent généralement un certain nombre d'outils et du temps, alors que les opérateurs utilisant les pompes n'ont pas forcément à leur disposition tous les outils nécessaires, ou bien travaillent en extérieur dans des conditions ne favorisant pas la maintenance.

En outre, sur certaines pompes, les filets de vissage du clapet sont susceptibles d'être mis en contact avec le produit, ce qui complique le démontage.

C'est à ces inconvénients qu'entend remédier l'invention en proposant une nouvelle pompe pour un système d'application de produit de revêtement permettant des opérations de nettoyage et de maintenance simplifiées.

A cet effet, l'invention concerne une pompe pour un système d'application d'un produit de revêtement, comprenant un corps de pompe, et un clapet d'aspiration solidaire du corps de pompe, destiné à être relié à une source de produit de revêtement, le clapet d'aspiration comprenant un corps de clapet et une soupape. Le corps de clapet comprend une première pièce solidaire du corps de pompe, et une deuxième pièce vissée à la première pièce, ladite deuxième pièce comportant un support de soupape, situé radialement à l'intérieur de la première pièce et formant un siège du clapet destiné à coopérer avec la soupape pour établir une étanchéité. Cette pompe est caractérisée en ce que la deuxième pièce comporte également un écrou, fixé au support de soupape, s'étendant radialement autour d'une partie d'extrémité de la première pièce, cette partie d'extrémité présentant un filetage externe coopérant avec un filetage interne de l'écrou, en ce qu'après dévissage de l'écrou de la première pièce, la seconde pièce et la soupape sont extractibles de la première pièce, et en ce que l'écrou et le support de soupape sont fixés de manière non démontable.

Grâce à l'invention, le siège de la soupape et la soupape peuvent être démontés par dévissage de façon aisée par le bas de la pompe.

Selon des aspects avantageux mais non obligatoires de l'invention, une telle pompe peut incorporer une ou plusieurs des caractéristiques suivantes, prises selon toute combinaison techniquement admissible :
- L'écrou est muni de formes externes de démontage permettant de dévisser ou visser la seconde pièce dans la première pièce au moyen d'un outil non spécifique. Le siège de la soupape et la soupape peuvent donc être démontés sans outillage spécifique.
- Le support de soupape comporte une partie tubulaire supportant le siège, ladite partie tubulaire étant insérée dans une cavité interne de la première pièce. Un diamètre externe maximal de la partie tubulaire du support de soupape et un diamètre externe maximal de la soupape sont inférieurs à un diamètre interne minimal de la cavité interne.
- Le filetage externe est fluidiquement isolé de la cavité interne par une partie d'extrémité tubulaire de la première pièce. Le filetage interne est fluidiquement isolé d'un conduit interne de la deuxième pièce par la partie tubulaire du support de soupape.
- La première pièce comprend une surface interne tronconique d'appui contre laquelle une surface externe tronconique correspondante du support de soupape s'appuie de manière à créer une étanchéité entre le support de soupape et la première pièce.
- Le siège du clapet est formé par une pièce fixée sur le support de soupape.
- L'écrou est lié de manière indémontable avec un outil de dévissage de la seconde pièce.
- Les formes externes de l'écrou forment des protubérances radiales s'étendant dans des plans comprenant un axe central de la pompe, actionnables par percussion par un outil non spécifique pour le dévissage ou le vissage de la seconde pièce.
- Les formes externes de l'écrou forment une empreinte d'accueil d'un outil de dévissage ou de vissage non spécifique de la seconde pièce.

L'invention concerne également une utilisation d'une pompe telle que mentionnée ci-dessus, caractérisée en ce qu'elle consiste à utiliser un outillage non spécifique pour dévisser ou visser la seconde pièce de la première pièce par action sur les formes externes de l'écrou de la deuxième pièce à l'aide dudit outil non spécifique.

L'invention sera mieux comprise et d'autres avantages de celle-ci apparaitront plus clairement à la lumière de la description qui va suivre d'une pompe et d'une utilisation de cette pompe conformes à son principe, faite à titre d'exemple non limitatif et en référence aux dessins annexés dans lesquels :
- La figure 1 est une coupe selon un plan longitudinal d'une pompe selon l'invention, dans une configuration démontée ;
- La figure 2 est une coupe similaire à la figure 1, dans une configuration assemblée ;
- La figure 3 est une vue en perspective de la pompe de la figure 1 dans la configuration démontée ;
- La figure 4 est une vue en perspective de la pompe en configuration assemblée et en cours de dévissage d'un clapet d'aspiration de la pompe ;
- La figure 5 est une vue en perspective de la pompe en configuration démontée, montrant une variante de réalisation d'un écrou du clapet d'aspiration;
- La figure 6 est une vue en perspective de la pompe en configuration assemblée et en cours de dévissage, montrant un outil de dévissage lié de manière indémontable au clapet d'aspiration.

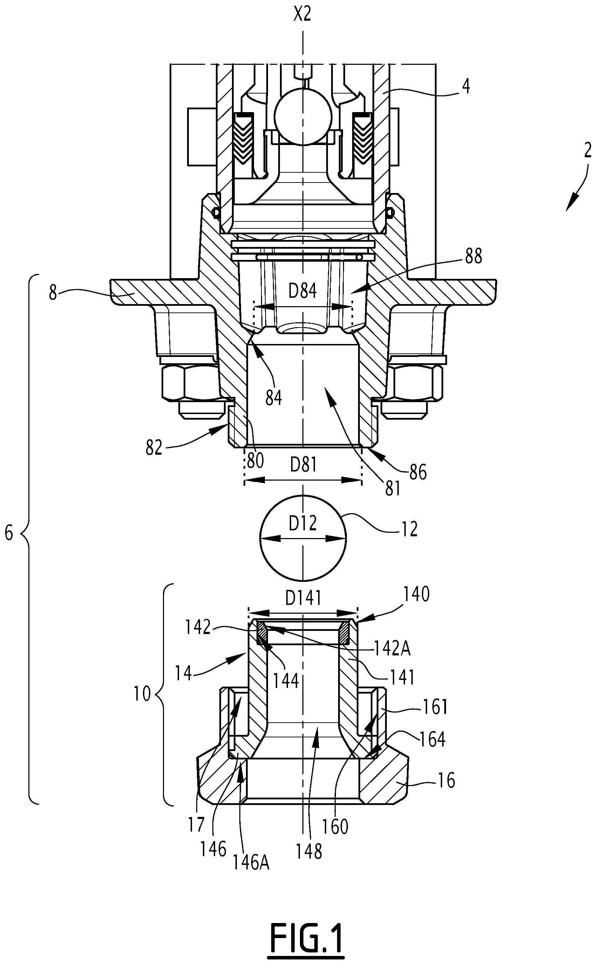

La figure 1 représente une pompe 2 pour un système d'application d'un produit de revêtement, tel que par exemple une peinture ou un vernis. Une telle pompe est destinée notamment à des usages extérieurs, par exemple chantiers, coques de bateaux, revêtement de métaux de charpentes, pour l'application de peintures ou de matériaux anticorrosion. En usage intérieur, une telle pompe peut être utilisée dans l'industrie automobile.

L'invention s'applique aux pompes utilisant l'air comme vecteur du produit à appliquer, aussi bien qu'aux pompes sans air (« airless »).

La pompe 2 comprend un corps de pompe 4, et un clapet d'aspiration 6 solidaire du corps de pompe 4, destiné à être relié à une source de produit de couverture non représentée. Le clapet d'aspiration 6 comprenant un corps de clapet formé par une première pièce 8 solidaire du corps de pompe 4, et par une deuxième pièce 10 vissée à la première pièce 8, et une soupape. La soupape est formée dans cet exemple par une bille 12. La pompe 2 définit un axe central longitudinal X2.

L'axe longitudinal X2 est un axe vertical, et dans ce qui suit, les directions « haut » et « bas » sont utilisées en référence à l'axe longitudinal X2 par rapport à l'orientation de la figure 1. Le corps de pompe 4 se situe donc en partie haute de la pompe 2, tandis que le clapet d'aspiration 6 se situe en partie basse.

Les termes « intérieur », « interne », « extérieur », « externe », « radial » ou « axial » sont employés en référence à cet axe X2. Une surface radiale est une surface courbe entourant l'axe central X2, et une surface axiale est une surface perpendiculaire à l'axe X2.

La première pièce 8 est fixée au corps de pompe 4 par tout moyen adapté, par exemple par vissage.

La deuxième pièce 10 comporte un support de soupape 14, situé radialement à l'intérieur de la première pièce 8 et formant un siège 142 du clapet 6 destiné à coopérer avec la bille 12 pour établir une étanchéité entre la première pièce 8 et la deuxième pièce 10.

La deuxième pièce 10 peut comprendre, de façon optionnelle, un tube de raccordement non représenté à une canne d'aspiration de produit.

La première pièce 8 présente une géométrie globalement cylindrique centrée sur l'axe central X2 et définissant une cavité interne 81, dans laquelle est reçu le support de soupape 14. Le support de soupape 14 est globalement cylindrique centré sur l'axe central X2, et présente une partie tubulaire 141 qui est reçue dans la cavité interne 81. La partie tubulaire 141 a un diamètre externe maximal D141 qui est inférieur à un diamètre interne minimal D81 de la cavité interne 81.

La deuxième pièce 10 comporte également un écrou 16, fixé au support de soupape 14, s'étendant radialement autour d'une partie d'extrémité 80 de la première pièce 8, cette partie d'extrémité 80 présentant un filetage externe 82 coopérant avec un filetage interne 160 de l'écrou 16. La partie d'extrémité 80 est de forme tubulaire centrée sur l'axe central X2 et s'étend vers le bas en entourant la cavité interne 81. Le filetage externe 82 est prévu sur une surface radiale externe de la partie d'extrémité 80.

Le filetage externe 160 est prévu sur une surface radiale interne d'une partie tubulaire 161 de l'écrou 16, centrée sur l'axe central X2, et qui forme une avancée vers le haut parallèle à la partie tubulaire 14 du support de soupape 14. Les parties tubulaires 141 et 161 définissent entre elles un espace annulaire 17 dans lequel est reçue la partie d'extrémité 80 de la première pièce 8.

La première pièce 8 comprend une surface interne 84 tronconique d'appui contre laquelle une surface externe 140 tronconique correspondante du support de soupape 14 s'appuie de manière à créer une étanchéité entre le support de soupape 14 et la première pièce 8. La surface interne 84 est prévue à une extrémité haute de la cavité interne 81, à l'opposé d'un bord axial inférieur 86 de la partie d'extrémité 80. La surface interne 84 forme une réduction de diamètre interne D84, inférieur au diamètre D81, et converge vers l'axe central X2 en direction de la partie haute de la pompe 2.

Le siège 142 du clapet 6 est formé par une pièce fixée sur le support de soupape 14. Le siège 142 est une pièce de forme annulaire fixée dans une gorge interne 144 de la partie tubulaire 141. Le siège 142 présente une surface tronconique 142A sur laquelle repose la bille 12.

La bille 12, et de façon plus générale la soupape, présente un diamètre externe maximal D12 inférieur au diamètre interne minimal D84 de la surface tronconique 84, et donc également inférieur au diamètre interne D81. La bille 12 est donc capable d'être insérée partiellement dans la première pièce 8 plus haut que la surface tronconique 84, dans une cavité haute 88 de la première pièce 8.

Le diamètre externe maximal D141 de la partie tubulaire 141 et le diamètre externe maximal D12 de la bille 12 étant inférieurs au diamètre interne minimal D81 de la cavité interne 81, le siège 142 et la bille 12 peuvent être insérés dans la cavité 81 et retirés de la cavité 81 par le bas.

L'écrou 16 et le support de soupape 14 sont liés de manière non démontable. Ils forment un ensemble solidaire facilitant le démontage et évitant de démonter successivement plusieurs pièces. Par exemple, l'écrou 16 et le support de soupape 14 peuvent être collés l'un à l'autre.

Le support de soupape 14 présente une collerette 146, s'étendant radialement vers l'extérieur en partie basse du support de soupape 14, et qui entre en contact avec la partie tubulaire 161 de l'écrou 16. La collerette 146 présente une surface axiale 146A orientée vers le bas. L'écrou 16 définit une surface axiale 164 s'étendant radialement vers l'intérieur à partir de la partie tubulaire 161, et orientée vers le haut. Les surfaces 146A et 164 sont en appui l'une contre l'autre, et selon un mode de réalisation peuvent être collées l'une à l'autre.

On entend également par « liés de manière non démontable » le fait que le support de soupape 14 et l'écrou 16 peuvent former une seule pièce venue de matière, c'est-à-dire une seconde pièce 10 monobloc.

L'écrou 16 est muni de formes externes de démontage permettant de dévisser et démonter la seconde pièce 10 de la première pièce 8.

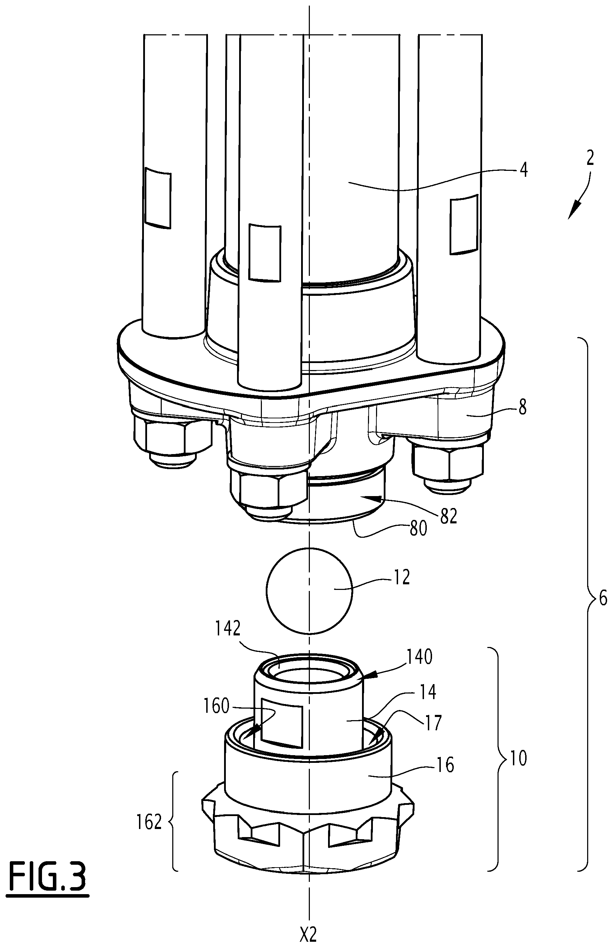

Comme cela est visible sur la figure 3, les formes externes de l'écrou 16 peuvent former une empreinte 162 d'accueil d'un outil de dévissage de la seconde pièce 10, tel qu'une clé 18.

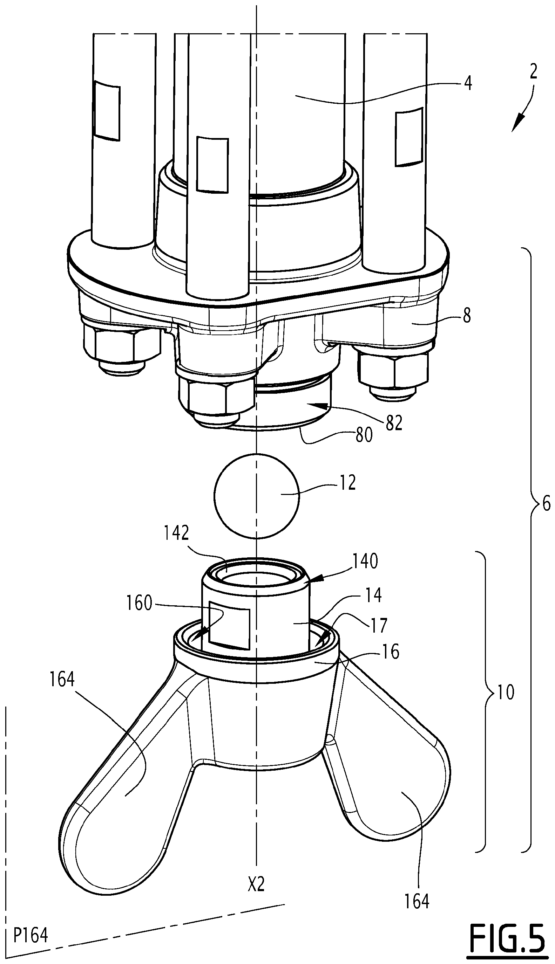

En variante représentée sur la figure 5, les formes externes de l'écrou 16 peuvent former des protubérances radiales 164 s'étendant par exemple dans des plans P164 comprenant l'axe central X2, et actionnables pour le dévissage de la seconde pièce 10. Par exemple, l'écrou 16 peut être du type « écrou papillon » c'est-à-dire être muni de protubérances radiales 164 formant des ailettes radiales permettant son dévissage.

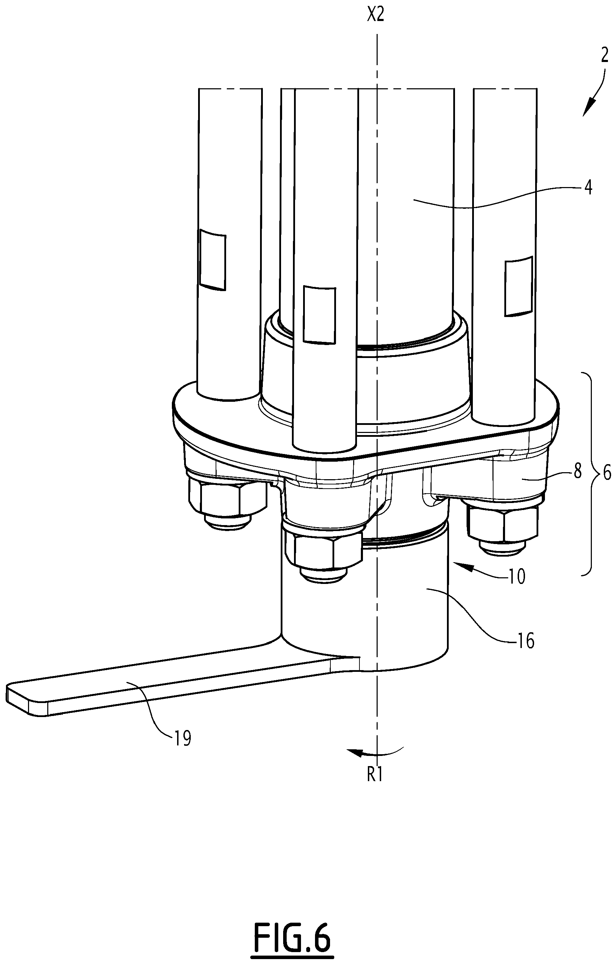

Selon un aspect représenté à la figure 6, les protubérances radiales peuvent également être formées par une clé 19 fixée de manière non démontable sur l'écrou 16. Par « fixé de manière non démontable », on entend que la clé 19 ou plus généralement l'outil peut être encastré, collé, ou bien même former une seule pièce monobloc avec l'écrou 16. Autrement dit l'outil ou la clé 19 peut être une excroissance de matière issue de la périphérie externe de l'écrou 16 qui servirait de bras de levier pour actionner le desserrage ou le resserrage de l'écrou 16, par exemple respectivement avant et après une opération de nettoyage de la bille 12.

Ainsi, l'utilisateur de la pompe 2 selon l'invention n'a pas à penser à prendre d'outil spécifique en début de session de peinture. La pompe 2 n'implique donc pas de matériel complémentaire embarqué pour la maintenance directement sur le lieu d'utilisation. Dans un tel cas, l'outil ou la clé 19 forme un tout indémontable avec l'écrou 16.

Dans de tels cas, un opérateur nécessite, pour dévisser l'écrou 16, d'exercer une action de poussée de la ou de l'une des protubérances radiales. Cela peut être fait par exemple en frappant une protubérance radiale avec un outil percussif standard de type maillet ou marteau. De façon plus générale, les formes externes de l'écrou forment une ou des surfaces pouvant être percutées avec un outil quelconque pour dévisser la seconde pièce 10.

Il peut également être envisagé que le support de soupape 14, l'écrou 16 et l'outil de dévissage 18 ou la clé 19 forment une ensemble non démontable, par exemple collé, soudé, fixé de manière irréversible ou bien venu de matière pour former un ensemble monobloc.

Dans le cas où l'outil et l'écrou 16 ne forment pas un ensemble indémontable, l'empreinte externe 162 de l'écrou 16 est avantageusement prévue avec des excroissances de matière choisies de manière à coopérer avec tout type d'outils standards (clé à molette, clé anglaise, clé Allen, autres) de manière à rendre les opérations de desserrage ou resserrage non limitées à l'utilisation d'un outil spécifique.

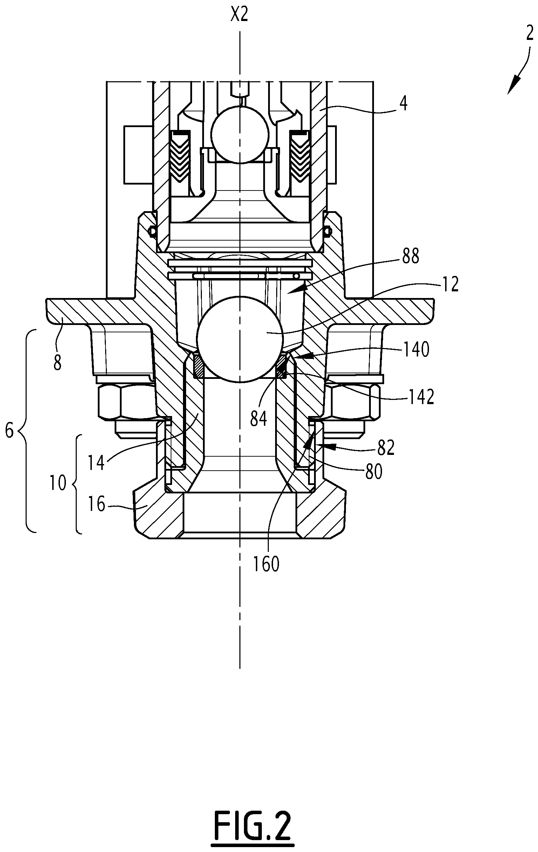

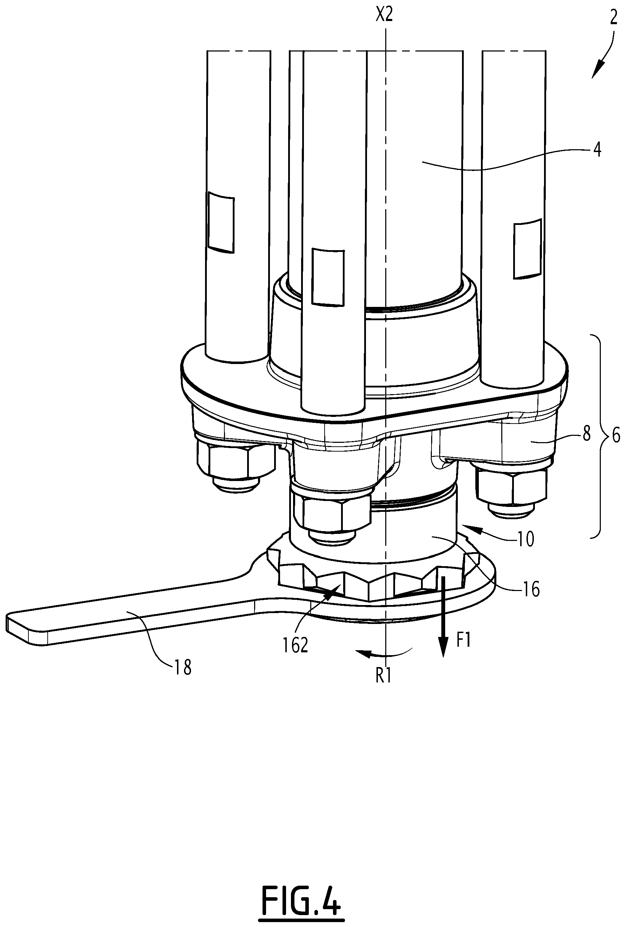

Lors d'une opération de maintenance ou de nettoyage, le clapet 6 est démonté de la manière suivante. Initialement, la pompe 2 et le clapet 6 sont assemblés comme cela est représenté aux figures 2 et 4. Un opérateur positionne la clé 18 sur l'empreinte 162 et effectue une rotation autour de l'axe central X2 selon la flèche R1 à la figure 4, de manière à dévisser l'écrou 16 de la première pièce 8. Après dévissage de l'écrou 16 de la première pièce 8, la seconde pièce 10 et la bille 12 sont extractibles de la première pièce 8 par le bas, selon la flèche F1 à la figure 4. Cette manoeuvre de démontage est simple et rapide et ne nécessite pas un outillage élaboré. La première pièce 8 du clapet 6 ne nécessite pas d'être démontée.

En outre les filetages 160 et 82 sont constamment éloignés de la veine fluide, c'est-à-dire de la zone de circulation du produit. Le filetage 82 est externe et est donc isolé fluidiquement de la veine fluide, formée par la cavité interne 81, par la partie d'extrémité 80. Le filetage interne 160 est isolé fluidiquement de la veine fluide, formée par un conduit interne 148 du support de soupape 14, par la partie tubulaire 141, qui s'étend axialement plus haut que le filetage 160. Les filetages 160 et 82 ne risquent donc pas d'être exposés au produit et de compliquer le démontage.

## Revendications

1. Pompe (2) pour un système d'application d'un produit de revêtement, comprenant un corps de pompe (4), et un clapet (6) d'aspiration solidaire du corps de pompe (4), destiné à être relié à une source de produit de revêtement, le clapet (6) d'aspiration comprenant un corps de clapet (8, 10) et une soupape (12), le corps de clapet (8, 10) comprenant une première pièce (8) solidaire du corps de pompe (4), et une deuxième pièce (10) vissée à la première pièce (8), ladite deuxième pièce (10) comportant un support de soupape (14), situé radialement à l'intérieur de la première pièce (8) et formant un siège (142) du clapet (6) destiné à coopérer avec la soupape (12) pour établir une étanchéité, **caractérisée en ce que** ladite deuxième pièce (10) comporte également un écrou (16), fixé au support de soupape (14), s'étendant radialement autour d'une partie d'extrémité (80) de la première pièce (8), cette partie d'extrémité (80) présentant un filetage externe (82) coopérant avec un filetage interne (160) de l'écrou (16), **en ce que** après dévissage (R1) de l'écrou (16) de la première pièce (8), la seconde pièce (10) et la soupape (12) sont extractibles (F1) de la première pièce (8), et **en ce que** l'écrou (16) et le support de soupape (14) sont fixés de manière non démontable.

2. Pompe selon la revendication 1, **caractérisée en ce que** l'écrou (16) est muni de formes externes (162) de démontage permettant de dévisser ou visser la seconde pièce (10) dans la première pièce (8) au moyen d'un outil non spécifique.

3. Pompe selon l'une des revendications précédentes, **caractérisée en ce que** le support de soupape (14) comporte une partie tubulaire (141) supportant le siège (142), ladite partie tubulaire étant insérée dans une cavité interne (81) de la première pièce (8), et **en ce qu'**un diamètre externe maximal (D141) de la partie tubulaire (141) du support de soupape (14) et un diamètre externe maximal (D12) de la soupape (12) sont inférieurs à un diamètre interne minimal (D81) de la cavité interne (81).

4. Pompe selon la revendication 3, **caractérisée en ce que** le filetage externe (82) est fluidiquement isolé de la cavité interne (81) par une partie d'extrémité tubulaire (80) de la première pièce (8), et **en ce que** le filetage interne (160) est fluidiquement isolé d'un conduit interne (148) de la deuxième pièce (10) par la partie tubulaire (141) du support de soupape (14).

5. Pompe selon l'une des revendications précédentes, **caractérisée en ce que** la première pièce (8) comprend une surface interne (84) tronconique d'appui contre laquelle une surface externe (140) tronconique correspondante du support de soupape (14) s'appuie de manière à créer une étanchéité entre le support de soupape (14) et la première pièce (8).

6. Pompe selon l'une des revendications précédentes, **caractérisée en ce que** le siège (142) du clapet (6) est formé par une pièce fixée sur le support de soupape (14).

7. Pompe selon l'une des revendications précédentes, **caractérisée en ce que** l'écrou (16) est lié de manière indémontable avec un outil (19) de dévissage de la seconde pièce (10).

8. Pompe selon l'une des revendications 1 à 6, **caractérisée en ce que** les formes externes de l'écrou (16) forment des protubérances radiales (164) s'étendant dans des plans (P164) comprenant un axe central (X2) de la pompe (2), actionnables par percussion par un outil non spécifique pour le dévissage ou le vissage de la seconde pièce (10).

9. Pompe selon l'une des revendications 1 à 6, **caractérisée en ce que** les formes externes de l'écrou (16) forment une empreinte d'accueil (162) d'un outil (18) de dévissage ou de vissage non spécifique de la seconde pièce (10).

10. Utilisation d'une pompe (2) selon l'une des revendications précédentes, **caractérisée en ce qu'**elle consiste à utiliser un outillage non spécifique pour dévisser ou visser la seconde pièce (10) de la première pièce (8) par action sur les formes externes (162) de l'écrou (16) de la deuxième pièce (10) à l'aide dudit outil non spécifique.

## Patentansprüche

1. Pumpe (2) für ein System zum Auftragen eines Beschichtungsprodukts, die einen Pumpenkörper (4) und ein fest mit dem Pumpenkörper (4) verbundenes Ansaugventil (6) umfasst, das dazu bestimmt ist, mit einer Beschichtungsproduktquelle verbunden zu sein, wobei das Ansaugventil (6) einen Ventilkörper (8, 10) und ein Ventil (12) umfasst, wobei der Ventilkörper (8, 10) ein erstes Teil (8) umfasst, das mit dem Pumpenkörper (4) fest verbunden ist, und ein zweites Teil (10), das mit dem ersten Teil (8) verschraubt ist, wobei das zweite Teil (10) einen Ventilhalter (14) aufweist, der sich radial im Inneren des ersten Teils (8) befindet und einen Sitz (142) des Ventils (6) bildet, der dazu bestimmt ist, mit dem Ventil (12) zusammenzuwirken, um eine Dichtigkeit herzustellen, **dadurch gekennzeichnet, dass** das zweite Teil (10) ebenfalls eine Mutter (16) aufweist, die an dem Ventilhalter (14) befestigt ist und sich radial um einen Endabschnitt (80) des ersten Teils (8) erstreckt, wobei dieser Endabschnitt (80) ein Außengewinde (82) aufweist, das mit einem Innengewinde (160) der Mutter (16) zusammenwirkt, dass nach dem Abschrauben (R1) der Mutter (16) von dem ersten Teil (8) das zweite Teil (10) und das Ventil (12) aus dem ersten Teil (8) herausziehbar (F1) sind, und dass die Mutter (16) und der Ventilhalter (14) nicht demontierbar befestigt sind.

2. Pumpe nach Anspruch 1, **dadurch gekennzeichnet, dass** die Mutter (16) mit äußeren Demontageformen (162) versehen ist, die es gestatten, das zweite Teil (10) mit Hilfe eines unspezifischen Werkzeugs von dem ersten Teil (8) abzuschrauben oder anzuschrauben.

3. Pumpe nach einem der vorhergehenden Ansprüche, **dadurch gekennzeichnet, dass** der Ventilhalter (14) einen rohrförmigen Abschnitt (141) aufweist, der den Sitz (142) trägt, wobei der rohrförmige Abschnitt in einen inneren Hohlraum (81) des ersten Teils (8) eingesetzt ist, und dass ein maximaler Außendurchmesser (D141) des rohrförmigen Abschnitts (141) des Ventilhalters (14) und ein maximaler Außendurchmesser (D12) des Ventils (12) kleiner als ein minimaler Innendurchmesser (D81) des inneren Hohlraums (81) sind.

4. Pumpe nach Anspruch 3, **dadurch gekennzeichnet, dass** das Außengewinde (82) von dem inneren Hohlraum (81) durch einen rohrförmigen Endabschnitt (80) des ersten Teils (8) fluidisch isoliert ist, und dass das Innengewinde (160) von einem inneren Kanal (148) des zweiten Teils (10) durch den rohrförmigen Abschnitt (141) des Ventilhalters (14) fluidisch isoliert ist.

5. Pumpe nach einem der vorhergehenden Ansprüche, **dadurch gekennzeichnet, dass** das erste Teil (8) eine kegelstumpfförmige innere Anlagefläche (84) aufweist, an der eine entsprechende kegelstumpfförmige äußere Fläche (140) des Ventilhalters (14) derart anliegt, dass eine Dichtigkeit zwischen dem Ventilhalter (14) und dem ersten Teil (8) erzeugt wird.

6. Pumpe nach einem der vorhergehenden Ansprüche, **dadurch gekennzeichnet, dass** der Sitz (142) des Ventils (6) von einem Teil gebildet wird, das an der Ventilhalterung (14) befestigt ist.

7. Pumpe nach einem der vorhergehenden Ansprüche, **dadurch gekennzeichnet, dass** die Mutter (16) mit einem Werkzeug (19) zum Abschrauben des zweiten Teils (10) undemontierbar verbunden ist.

8. Pumpe nach einem der Ansprüche 1 bis 6, **dadurch gekennzeichnet, dass** die äußeren Formen der Mutter (16) radiale Vorsprünge (164) bilden, die sich in Ebenen (P164) erstrecken, die eine Mittelachse (X2) der Pumpe (2) umfassen, die durch Schlag mit einem nicht spezifischen Werkzeug zum Abschrauben oder Anschrauben des zweiten Teils (10) betätigbar sind.

9. Pumpe nach einem der Ansprüche 1 bis 6, **dadurch gekennzeichnet, dass** die äußeren Formen der Mutter (16) eine Aufnahmevertiefung (162) für ein unspezifisches Werkzeug (18) zum Abschrauben oder Anschrauben des zweiten Teils (10) bilden.

10. Verwendung einer Pumpe (2) nach einem der vorhergehenden Ansprüche, **dadurch gekennzeichnet, dass** sie darin besteht, ein unspezifisches Werkzeug zum Anschrauben oder Abschrauben des zweiten Teils (10) vom ersten Teil (8) durch Einwirken auf die äußeren Formen (162) der Mutter (16) des zweiten Teils (10) mit Hilfe des unspezifischen Werkzeugs zu verwenden.

## Claims

1. A pump (2) for a system for applying a coating product, comprising a pump body (4), and an intake valve (6) secured to the pump body (4), intended to be connected to a source of coating product, the intake valve (6) comprising a valve body (8, 10) and a valve shutter (12), the valve body (8, 10) comprising a first component (8) secured to the pump body (4), and a second component (10) screwed to the first component (8), said second component (10) including a valve-shutter support (14), situated radially toward the inside of the first component (8) and forming a seat (142) of the valve (6) which is intended to collaborate with the valve shutter (12) in order to establish sealing, **characterized in that** said second component (10) also includes a nut (16), attached to the valve-shutter support (14), extending radially around an end part (80) of the first component (8), this end part (80) having an external screw thread (82) cooperating with an internal screw thread (160) of the nut (16), **in that** after unscrewing (R1) of the nut (16) from the first component (8), the second component (10) and the valve shutter (12) can be extracted (F1) from the first component (8), and **in that** the nut (16) and the valve-shutter support (14) are attached so as not to be separable.

2. The pump according to claim 1, **characterized in that** the nut (16) is provided with external disassembly shapes (162) making it possible to unscrew or screw the second component (10) in the first component (8) using a nonspecific tool.

3. The pump according to one of the preceding claims, **characterized in that** the valve-shutter support (14) includes a tubular part (141) supporting the seat (142), said tubular part being inserted into an internal cavity (81) of the first component (8), and **in that** a maximum external diameter (D141) of the tubular part (141) of the valve-shutter support (14) and a maximum external diameter (D12) of the valve shutter (12) are smaller than a minimum internal diameter (D81) of the internal cavity (81).

4. The pump according to claim 3, **characterized in that** the external screw thread (82) is fluidly insulated from the internal cavity (81) by a tubular end part (80) of the first component (8), and **in that** the internal screw thread (160) is fluidly insulated from an internal duct (148) of the second component (10) by the tubular part (141) of the valve-shutter support (14).

5. The pump according to one of the preceding claims, **characterized in that** the first component (8) comprises a frustoconical internal bearing surface (84) against which a corresponding external frustoconical surface (140) of the valve-shutter support (14) bears so as to create sealing between the valve-shutter support (14) and the first component (8).

6. The pump according to one of the preceding claims, **characterized in that** the seat (142) of the valve (6) is formed by a component attached on the valve-shutter support (14).

7. The pump according to one of the preceding claims, **characterized in that** the nut (16) is connected inseparably with a tool (19) for unscrewing the second component (10).

8. The pump according to one of claims 1 to 6, **characterized in that** the external shapes of the nut (16) form radial protuberances (164) extending in planes (P164) comprising a central axis (X2) of the pump (2), able to be actuated by percussion by a nonspecific tool for the unscrewing or the screwing of the second component (10).

9. The pump according to one of claims 1 to 6, **characterized in that** the external shapes of the nut (16) form a recess (162) for accommodating a nonspecific unscrewing or screwing tool (18) for the second component (10).

10. Use of a pump (2) according to one of the preceding claims, **characterized in that** it consists in using a nonspecific tooling to unscrew or to screw the second component (10) with respect to the first component (8) by action on the external shapes (162) of the nut (16) of the second component (10) using said nonspecific tool.
